# EUROPEAN PATENT APPLICATION

(11) **EP 1 111 833 A2**
(43) Date of publication of application: **27.06.2001**
(21) Application number: 00311354.5
(22) Date of filing: 19.12.2000
(51) Int. Cl.: H04L 1/20

(54) **Transmission quality monitoring system with less delay**

(30) Priority: 24.12.1999 JP 36585599
(71) Applicant: NEC CORPORATION, Tokyo (JP)
(72) Inventor: Takehana, Toshiyuki, c/o Nec Corporation, Tokyo (JP)
(74) Representative: Moir, Michael Christopher

(57) **Abstract**

An optical signal transmission system includes a transmission station, at least one relaying unit connected to the transmission station via an optical path, and a reception station connected to the relaying unit via an optical path. The transmission station transmits a transmission signal to the reception station via the relaying unit, the transmission signal includes a first monitor code which is not subjected to a FEC (forward error correction) coding operation. The relaying unit detects a transmission error in the transmission signal without a FEC decoding operation based on the first monitor code.

## Description

### Background of the Invention

### 1. Field of the Invention

The present invention relates to a system and a method for monitoring transmission quality of data transmitted on a transmission communication network. More particularly, the present invention relates to a system and a method for monitoring transmission quality of data transmitted via relaying stations.

### 2. Description of the Related Art

Various proposals are conventionally carried out as a system or method for monitoring of transmission quality of data transmitted on a transmission communication network. For example, data about connection quality, transmission quality or stability quality of the communication network is collected and stored. Performance evaluation is carried out based on predetermined performance evaluation measure and these are displayed in a diagram. Also, a storage system of calculation data of calculation items to manage transmission quality is devised for the precision of the calculation data to be improved.

By the way, as the length of the relay interval becomes long in a transmission path using an optical fiber, the monitor of the transmission quality by the conventional transmission quality monitoring system is approaching a limit for the reasons such as transmission delay. Therefore, the study about a transmission communication network using forward error correction (FEC) control has been carried out.

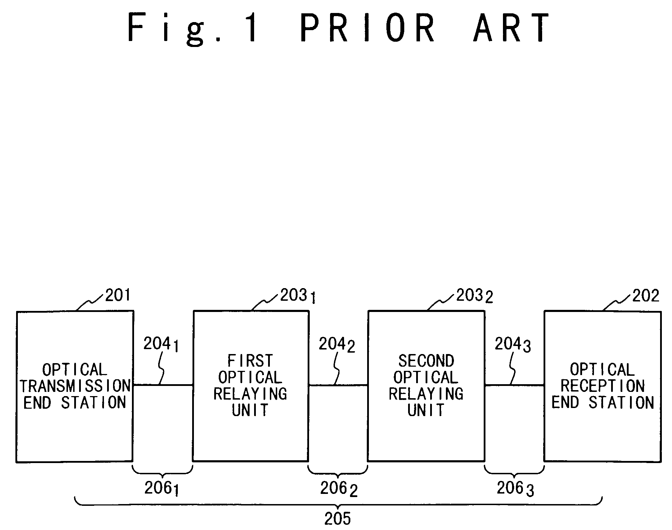

Fig. 1 shows an example of the transmission communication network using such a transmission quality monitoring system. In this example, a first optical relaying unit 103₁ and a second optical relaying unit 103₂ are arranged between an optical transmission end station 101 and an optical reception end station 102. An optical signal is sent out from the optical transmission end station 101, and then reaches the first optical relaying unit 103₁ by a first optical fiber transmission path 104₁, and then the optical signal is sent out from the first optical relaying unit 103₁ to the second optical relaying unit 1032 on a second optical fiber transmission path 104₂. Then, the optical signal is transmitted to the optical reception end station 102 last on a third optical fiber transmission path 104₃.

To carry out the monitor of the transmission quality in detail, it is necessary to monitor not only the transmission quality in the end-to-end interval 105 between the optical transmission end station 101 and the optical reception end station 102 but also the transmission quality in each of the optical relay intervals 106₁ to 106₃. Therefore, the monitor of the transmission quality on the transmission path must be carried out in both of these optical relay intervals 106₁ to 106₃, and the end-to-end interval 105.

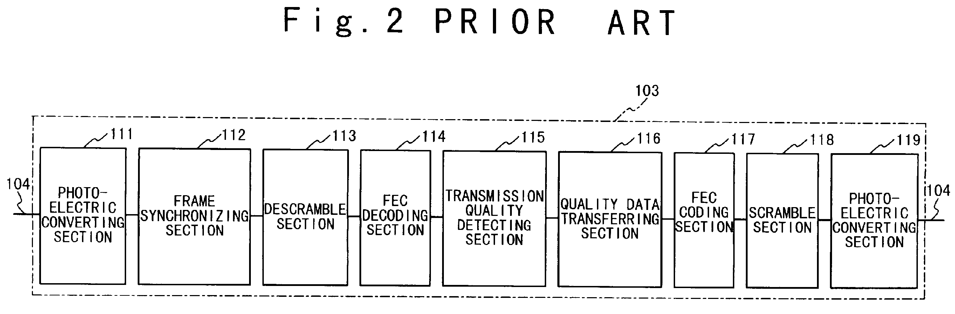

Fig. 2 shows the structure of a conventionally proposed optical relaying unit used in such a transmission quality monitoring system. The optical relaying unit 103 is composed of a photoelectric converter 111, which is connected to the optical fiber transmission path 104 to receive the optical signal sent through the path 104. The photoelectric converter 111 converts the received optical signal into an electrical signal. The electrical signal after the conversion is sent to a frame synchronization section 112.

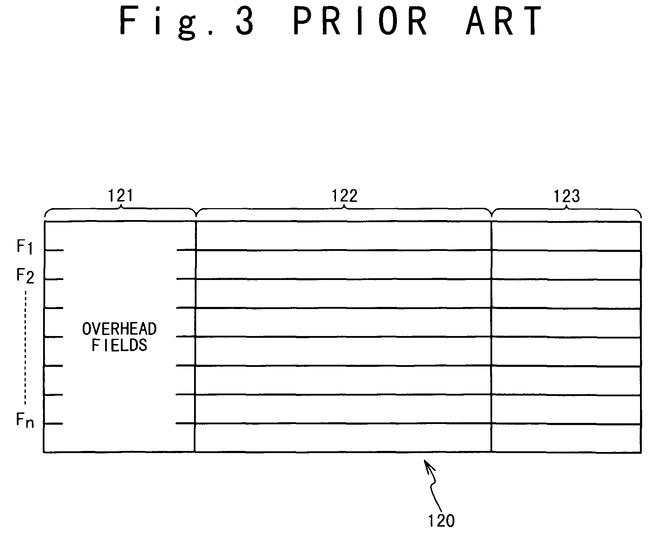

Fig. 3 shows the form of the transmission signal in the conventional transmission communication network. The signal 120 sent out of the optical transmission end station 101 is composed of n frames from the first frame F1 to the n-th frame Fn. Each of the frames is composed of an overhead field 121, a data field 122 and an additional bits field 123 for forward error correction (FEC). Coded data for the quality monitor is stored in the overhead fields 121.

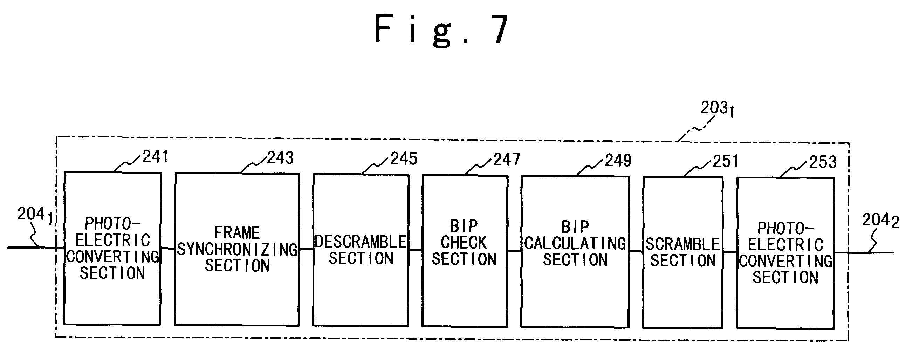

Referring to Fig. 7 again, the description is continued. A frame synchronizing section 112 establishes the synchronization with each frame. The signal in which synchronization has been established is sent to a descrambling section 113. The descrambling section 113 releases the scrambled state of the synchronized signal to supply the descrambled signal to a FEC decoding section 114. The FEC decoding section 114 carries out a FEC decoding operation to the descrambled signal. The next transmission quality detecting section 115 detects transmission quality using the FEC code to send out to a quality data transferring section 116. The quality data transferring section 116 operates to incorporate and output the detected transmission quality data into the overhead fields 121 appropriately. This signal which has been outputted from the quality data transfer section 116 is coded by the FEC coding section 117 and is scrambled by the scramble section 118. Then, the electrical signal is converted into an optical signal by the photoelectric converter 119 and is sent out on the optical fiber transmission path 104 of the next stage.

In the conventional transmission quality monitoring system using the signal 120 shown in Fig. 3, the transmission quality data is detected by the optical relaying units 103₁ and 103₂ shown in Fig. 1 as in the optical reception end station 102. The detected transmission quality data is incorporated in the overhead fields of the next signal and is sent out to the downstream side. In case to carry out such a process, each of optical relaying units 103₁ and 103₂ must carry out a decoding operation by the FEC decoding section 114 and a coding operation by the FEC coding section 117. Therefore, the circuit scale of each of the optical relaying units 103₁ and 103₂ increases but also the transmission delay is caused due to these signal processes.

In conjunction with the above description, a communication network performance estimation display system is disclosed in Japanese Laid Open Patent Application (JP-A-Heisei 3-289746). In this reference, data of connection quality, transmission quality and stability quality of a communication network are collected and stored in a data storage section. A signal processing section evaluates integrated performance of the communication network based on the data and a performance evaluation measure in which connection quality, transmission quality and stability quality of the communication network are integrated.
A display unit displays the integrated performance of the communication network in the form of figures which represent communication nodes and transmission paths of the communication network.

Also, a transmission quality management system is disclosed in Japanese Laid Open Patent Application (JP-A-Heisei 9-64941). In this reference, a regular buffer and a spare buffer are provided to store calculation data of calculation items. When the calculation item has been determined, the calculation data of the determined item is stored in the regular buffer directly. However, when the calculation item is indefinite, the calculation data of previously set items is stored in the spare buffer corresponding to the calculation item. When the item is determined, the calculation data of the determined item is read out from the spare buffer and added to the regular buffer. Then, all the spare buffers are cleared to "0".

### Summary of the Invention

Therefore, an object of the present invention is to provide a transmission quality monitoring system and a method of monitoring the transmission quality, in which the hardware structure of a relaying unit or a relaying station can be simplified when forward direction error correction (FEC) control is used.

Another object of the present invention is to provide a transmission quality monitoring system and a method of monitoring the transmission quality, in which it is possible to prevent transmission delay of a signal to a reception end station as less as possible.

According to an aspect of the present invention, an optical signal transmission system includes a transmission station, at least one relaying unit connected to the transmission station via an optical path, and a reception station connected to the relaying unit via an optical path. The transmission station transmits a transmission signal to the reception station via the relaying unit, the transmission signal includes a first monitor code which is not subjected to a FEC (forward error correction) coding operation. The relaying unit detects a transmission error in the transmission signal without a FEC decoding operation based on the first monitor code.

Here, the transmission signal may include a plurality of frames, and each of the plurality of frames may include an overhead field, a data field and a FEC code field. The first monitor code may be stored in ones of the overhead fields for the plurality of frames as a first field group.

Also, the transmission signal may include and a second monitor code which is subjected to the FEC (forward error correction) coding operation in addition to the first monitor code. The reception station carries out the FEC decoding operation to the transmission signal and detects a transmission error in the transmission signal based on the second monitor code. In this case, the reception station may detect a transmission error in the transmission signal between the relaying unit and the reception station based on the first monitor code. Also, the transmission signal may include a plurality of frames, and each of the plurality of frames may include an overhead field, a data field and a FEC code field.
The first monitor code and the second monitor code may be stored in first and second field groups of the overhead fields for the plurality of frames, respectively.

Also, the transmission signal may include a plurality of frames, and each of the plurality of frames may include an overhead field, a data field and a FEC code field. The first monitor code and the second monitor code may stored in first and second field groups of the overhead fields for the plurality of frames, respectively. In this case, the transmission station may include a transmission signal coding circuit which includes a first BIP (Bit Interleaved Parity) calculating section, a FEC coding section, a second BIP calculating section and a scrambling section. The first BIP (Bit Interleaved Parity) calculating section carries out a first BIP calculation to a signal to be transmitted to store a result of the first BIP calculation as the second monitor code in the second field group. The FEC coding section carries out a FEC coding operation to the first BIP calculation result and data of the signal after the first BIP calculation, to store an FEC code obtained as a result of the FEC coding operation in the FEC code field. The second BIP calculating section carries out a second BIP calculation to the signal after the FEC coding operation to store a BIP code as the first monitor code in the first field group. The scrambling section scrambles the signal after the second BIP calculation based on a predetermined generation polynomial, an optical signal corresponding to the scrambled signal being transmitted to the reception station as the transmission signal.

Also, the transmission signal may include a plurality of frames, and each of the plurality of frames includes an overhead field, a data field and a FEC code field. The first monitor code and the second monitor code are stored in first and second field groups of the overhead fields for the plurality of frames, respectively. In this case, the relaying unit receives the transmission signal, and includes a descrambling section, a first BIP check section, a BIP calculating section and a scrambling section. The descrambling section descrambles the received signal based on a predetermined generation polynomial. The first BIP check section carries out a third BIP calculation to the descrambled signal and compare a result of the third BIP calculation and the first monitor code stored in the first field group to determine whether the received signal has any transmission error. The BIP calculating section carries out a fourth BIP calculation to the descrambled signal to store a result of the fourth BIP calculation as the first monitor code in the first field group. The scrambling section scrambles the received signal after the fourth BIP calculation, an optical signal corresponding to the received signal after the scrambling being transmitted to the reception station as the transmission signal.

Also, the transmission signal may include a plurality of frames, and each of the plurality of frames includes an overhead field, a data field and a FEC code field. The first monitor code and the second monitor code are stored in first and second field groups of the overhead fields for the plurality of frames, respectively. In this case, the reception station receives the transmission signal, and includes a descrambling section, an FEC decoding section and a BIP check section. The descrambling section descrambles the received signal based on a predetermined generation polynomial. The FEC decoding section carries out the FEC decoding operation and an error correction to the descrambled signal to produce an object signal. The BIP check section carries out a fifth BIP calculation to the object signal and compares a result of the fifth BIP calculation to the second monitor code stored in the second field group to detect any transmission error. In this case, the reception may further include a second BIP check section, which carries out a sixth BIP calculation to the descrambled signal and compares a result of the sixth BIP calculation and the first monitor code stored in the first field group to detect any transmission error.

In another aspect of the present invention, a method of monitoring a transmission quality in an optical signal transmission system including a transmission station, at least one relaying unit connected to the transmission station via an optical path, and a reception station connected to the relaying unit via an optical path, is attained by transmitting a transmission signal from the transmission station to the reception station via the relaying unit, the transmission signal includes a first monitor code which is not subjected to a FEC (forward error correction) coding operation, and by detecting in the relaying unit, a transmission error in the transmission signal without a FEC decoding operation based on the first monitor code.

Here, the transmission signal may include a plurality of frames, each of the plurality of frames may include an overhead field, a data field and a FEC code field. Also, the first monitor code may be stored in ones of the overhead fields for the plurality of frames as a first field group.

Also, when the transmission signal includes a second monitor code which is subjected to the FEC (forward error correction) coding operation in addition to the first monitor code, the method may further include carrying out in the reception station, the FEC decoding operation to the transmission signal and detects a transmission error in the transmission signal based on the second monitor code. Also, the method may be further attained by detecting in the reception station, a transmission error in the transmission signal between the relaying unit and the reception station based on the first monitor code. Also, the transmission signal may include a plurality of frames, each of the plurality of frames may include an overhead field, a data field and a FEC code field, and the first monitor code and the second monitor code may be stored in first and second field groups of the overhead fields for the plurality of frames, respectively.

Also, when the transmission signal includes a plurality of frames, each of the plurality of frames includes an overhead field, a data field and a FEC code field, and the first monitor code and the second monitor code are stored in first and second field groups of the overhead fields for the plurality of frames, respectively, the transmitting may be attained by carrying out a first BIP calculation to a signal to be transmitted to store a result of the first BIP calculation as the second monitor code in the second field group, by carrying out a FEC coding operation to the first BIP calculation result and data of the signal after the first BIP calculation, to store an FEC code obtained as a result of the FEC coding operation in the FEC code field, by carrying out a second BIP calculation to the signal after the FEC coding operation to store a BIP code as the first monitor code in the first field group, and by scrambling the signal after the second BIP calculation based on a predetermined generation polynomial, an optical signal corresponding to the scrambled signal being transmitted to the reception station as the transmission signal.

Also, when the transmission signal includes a plurality of frames, each of the plurality of frames includes an overhead field, a data field and a FEC code field, and the first monitor code and the second monitor code are stored in first and second field groups of the overhead fields for the plurality of frames, respectively, the detecting in the relaying unit may be attained by receiving the transmission signal, by descrambling the received signal based on a predetermined generation polynomial, by carrying out a third BIP calculation to the descrambled signal and compare a result of the third BIP calculation and the first monitor code stored in the first field group to determine whether the received signal has any transmission error, by carrying out a fourth BIP calculation to the descrambled signal to store a result of the fourth BIP calculation as the first monitor code in the first field group, and by scrambling the received signal after the fourth BIP calculation, an optical signal corresponding to the received signal after the scrambling being transmitted to the reception station as the transmission signal.

Also, when the transmission signal includes a plurality of frames, each of the plurality of frames includes an overhead field, a data field and a FEC code field, and the first monitor code and the second monitor code are stored in first and second field groups of the overhead fields for the plurality of frames, respectively, the method may be attained by receiving the transmission signal by the reception station, by descrambling the received signal based on a predetermined generation polynomial, by carrying out the FEC decoding operation and an error correction to the descrambled signal to produce an object signal, and by carrying out a fifth BIP calculation to the object signal and compares a result of the fifth BIP calculation to the second monitor code stored in the second field group to detect any transmission error.
In this case, the method may be further attained by carrying out a sixth BIP calculation to the descrambled signal and compares a result of the sixth BIP calculation and the first monitor code stored in the first field group to detect any transmission error.

In still another aspect of the present invention, an optical signal relaying unit includes a descrambling section, a first BIP check section and a BIP calculating section. The descrambling section descrambles a reception signal transmitted from an upper stream based on a predetermined generation polynomial. The first BIP check section carries out a first BIP calculation to the descrambled signal and compare a result of the first BIP calculation and a first monitor code stored in a first predetermined overhead field group of the reception signal to determine whether the reception signal has any transmission error. The BIP calculating section carries out a second BIP calculation to the descrambled signal to store a result of the second BIP calculation as the first monitor code in the first overhead field group. The scrambling section scrambles the scrambled signal after the second BIP calculation, an optical signal corresponding to the scrambled signal being transmitted to the reception station as the transmission signal.

In still another aspect of the present invention, a reception station includes a descrambling section, an FEC decoding section, a BIP check section and a BIP check section. The descrambling section descrambles a reception signal transmitted from an upper stream based on a predetermined generation polynomial. The FEC decoding section carries out an FEC decoding operation and an error correction to the descrambled signal to produce an object signal. The BIP check section carries out a first BIP calculation to the object signal and compares a result of the first BIP calculation to a second monitor code stored in the second overhead field group of the reception signal to detect any transmission error. The BIP check section carries out a second BIP calculation to the descrambled signal and compares a result of the second BIP calculation and the first monitor code stored in the first overhead field group of the reception signal to detect any transmission error.

### Brief Description of the Drawings

Fig. 1 is a diagram showing the system configuration of a conventional transmission quality monitoring system;
Fig. 2 is a block diagram showing the structure of a conventional optical relaying unit;
Fig. 3 is a diagram showing the frame structure of a signal transmitted on a transmission communication network in the conventional transmission quality monitoring system;
Fig. 4 is a block diagram showing the whole system structure of a transmission quality monitoring system according to an embodiment of the present invention;
Fig. 5 is a diagram showing the frame structure of a transmission signal sent out from an optical transmission end station in the embodiment;
Fig. 6 is a block diagram showing the structure of a transmission signal coding circuit in the optical transmission end station shown in Fig. 4;
Fig. 7 is a block diagram showing the structure of an optical relaying unit in the embodiment; and
Fig. 8 is a block diagram showing a reception signal decoding circuit in the optical reception end station shown in Fig. 4.

### Description of the Preferred Embodiments

Hereinafter, a transmission quality monitoring system of the present invention will be described below in detail with reference to the attached drawings.

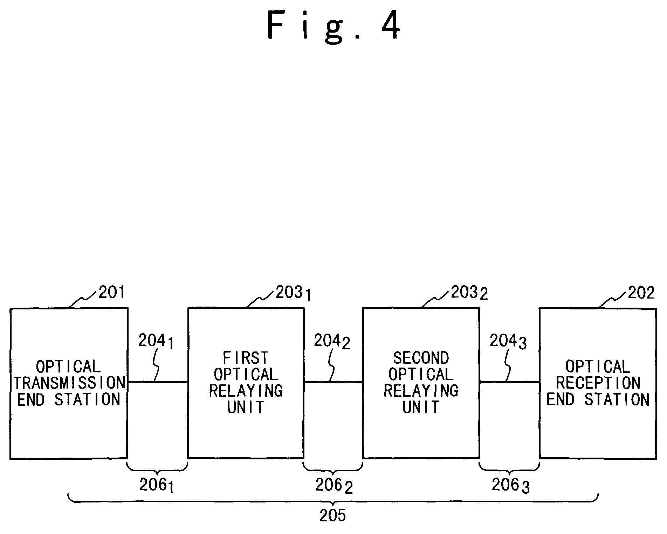

Fig. 4 shows the overall structure of a transmission quality monitoring system according to an embodiment of the present invention. A first optical relaying unit 203₁ and a second optical relaying unit 203₂ are arranged between an optical transmission end station 201 and an optical reception end station 202. An optical signal is sent out from the optical transmission end station 201 and reaches the first optical relaying unit 203₁ via a first optical fiber transmission path 204₁. Subsequently, the optical signal is sent out from the first optical relaying unit 203₁ to the second optical relaying unit 203₂ via a second optical fiber transmission path 204₂. Then, the optical signal is last transmitted to the optical reception end station 202 on a third optical fiber transmission path 204₃. In this embodiment, the transmission quality of a transmission signal is monitored in both of the end-to-end interval 205 and each of the optical relay intervals 206₁ to 206₃.

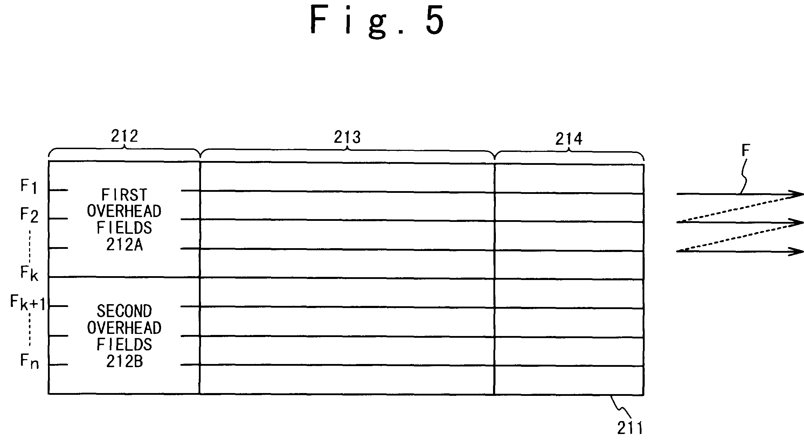

Fig. 5 shows the frame structure of a transmission signal sent out from the optical transmission end station in this embodiment. The signal 211 which has been sent out from the optical transmission end station 201 is composed of n frames from the first frame F1 to n-th frame Fn. Each of the frames is composed of an overhead field 212, and a data field 213 and an FEC adding bit field 214. In the overhead fields 212, the first frame to k-th frame (1<k<n) constitute the first overhead field group 212A. The (k+1)-th frame Fk+1 to the N-th frame Fn constitute the second overhead field group 212B. These frames F are scanned one frame by one frame, like the raster scan of a television.

The first quality monitor code out of the object of the FEC coding operation and the FEC decoding operation is stored in the first overhead field group 212A. On the other hand, the second quality monitor code as the object of the FEC coding operation and the FEC decoding operation is stored in the second overhead field group 212B. The first quality monitor code stored in the first overhead field group 212A is used as monitor data to check FEC coded data itself for detection of a transmission error in a transmission path without the FEC decoding operation. The first quality monitor code is composed of a quality monitor code such as parity. On the other hand, the second quality monitor code stored in the second overhead field group 212B is composed of a quality monitor code such as parity, like the first quality monitor code. The second quality monitor code is used to check data after the FEC decoding operation and error correction for the detection of an end-to-end transmission error in the optical reception end station 202.

The quality monitor code stored in the overhead field 121 and shown in Fig. 3 presupposes that the relaying unit 103 (Fig. 2) is composed of the FEC decoding section 114. Therefore, it is different from the first quality monitor code in this embodiment. Rather, the quality monitor code is similar to the second quality monitor code in this embodiment.

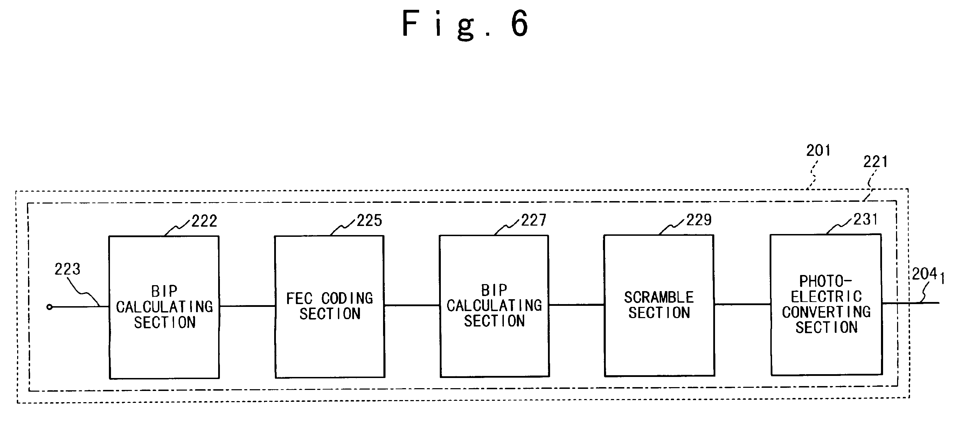

Fig. 6 shows the structure of the transmission signal coding circuit 221 of the optical transmission end station 201 shown in Fig. 1. The transmission signal coding circuit 221 is composed of a first BIP (Bit Interleaved Parity) calculating section 222, which carries out a parity check for every block of predetermined units. The first BIP calculating section 222 carries out BIP calculation to input data 223 before a FEC coding operation. Then, the calculation result is inserted as the second quality monitor code in the second overhead field group 212B of the signal 211 shown in Fig. 5. The FEC coding section 225 arranged in the next stage carries out the FEC coding operation to the second quality monitor code stored in the second overhead field group 212B and data stored in the data filed 213 to produce an FEC code and stores the FEC code in the FEC overhead bit field 214. The second BIP calculating section 227 carries out BIP calculation to the signal after the FEC coding operation to produce a BIP code and inserts the BIP code in the first overhead field group 212A. The scramble section 229 codes the signal after BIP calculation in accordance with a previously set generation polynomial. The coded electrical signal is converted into an optical signal by a photoelectric converter 231, and is sent out in order in units of frames onto the first optical fiber transmission path 204₁.

Fig. 7 shows the structure of the optical relaying unit. Here, the first optical relaying unit 203₁ is shown. Because the second optical relaying unit 203₂ has the same structure, the description will be omitted. The first optical relaying unit 203₁ is composed of a photoelectric converter 241 for receiving the optical signal sent on the first optical fiber transmission path 204₁ to convert the optical signal to an electric signal. A frame synchronization section 243 establishes the frame synchronization of the converted electric signal. A descrambling section 245 descrambles the electric signal in accordance with the previously set generation polynomial. A BIP check section 247 carries out the BIP calculation to the descrambled signal and compares the result of the BIP calculation and the first quality monitor code inserted in the first overhead field group 212A, to detects any transmission error of the optical relay interval based on the comparing result.

A BIP calculating section 249 carries out a BIP calculation to the electric signal after the descrambling operation, and inserts a BIP code as the result of the BIP calculation in the first overhead field group 212A as the first quality monitor code. The scrambling section 251 scrambles the electric signal after the descrambling operation. The scrambled electrical signal is converted into an optical signal by a photoelectric converter 253 and is sent onto the second optical fiber transmission path 204₂.

It should be noted that the transmission error detected by the first optical relaying unit 203₁ shown in this Fig. 7 is transmitted to a host monitoring apparatus (not shown) through an exclusive use transmission path (not shown). Because the route and technique to the host monitoring apparatus are not directly related with the present invention, the detailed description is omitted.

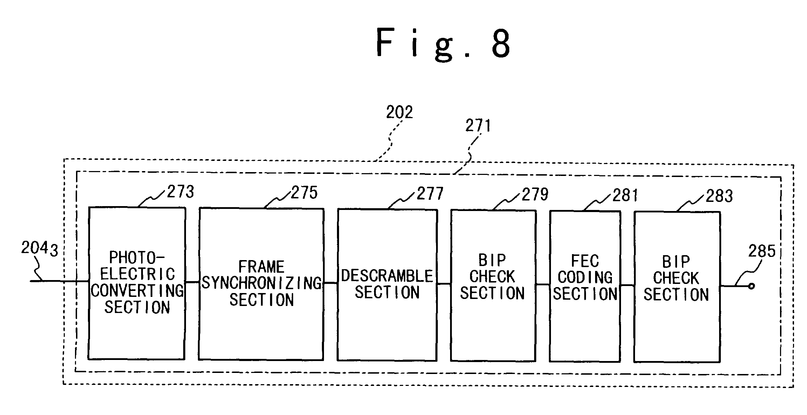

Fig. 8 shows an optical reception signal decoding circuit 271 of the optical reception end station 202 shown in Fig. 4 more specifically. The reception signal decoding circuit 271 is composed of a photoelectric converter 273 connected to one end of the third optical fiber transmission path 204₃ whose other end is connected to the second optical relaying unit 203₂ shown in Fig. 4. The photoelectric converter 273 converts the optical signal sent on the third optical fiber transmission path 204₃ into an electrical signal. A frame synchronization section 275 establishes the frame synchronization of the electric signal after the conversion. The descrambling section 277 descrambles the electric signal in accordance with the previously set generation polynomial. A BIP check section 279 carries out a BIP calculation to the descrambled signal in the next stage. Then, the BIP check section 279 compares the result of the BIP calculation and the first quality monitor code inserted in the first overhead field group 212A to detect a transmission error of the last optical relay interval 206₃.

The FEC decoding section 281 carries out the FEC decoding operation and an error correction to the descrambled signal. The BIP check section 283 carries out a BIP calculation to the signal after the FEC decoding operation. Then, the BIP check section 283 the error correction and compares a result of the BIP calculation and the BIP code as the second quality monitor code stored in the second overhead field group 212B of Fig. 5, to detect a transmission error of the output data 285 in the end-to-end interval 205 shown in Fig. 4.

In the embodiment described above, the first quality monitor code is arranged in the first half portion of the overhead fields 212 shown in Fig. 2, and the second quality monitor code is arranged in the second half of the overhead field group 212. However, the arrangement is not limit to this. For example, the second quality monitor code may be arranged in the second half of the overhead field group 212 and the first quality monitor code may be arranged in the first half portion of the overhead field group 212. Thus, various modifications are possible in which these quality monitor codes are divided and arranged into a plurality of areas, for example.

As described above, according to the invention, the relaying station can detect the transmission error of the transmission data without carrying out the FEC decoding operation and the error correction to the transmission data by the FEC decoding section, using the first quality monitor code of the transmission data. In this way, it is not necessary to prepare the FEC decoding section in the relaying station so that the relaying station can be simplified in the hardware structure. Also, it is possible to prevent the transmission delay of the transmission data signal to the reception end station as less as possible. Thus, the reliability of the relaying station can be improved.

Also, because the reception end station is provided with the transmission interval error detection section like the relaying station, the detection of the transmission interval error can be made possible in the same principle as the relaying station. It is possible to carry out perfect transmission quality management every interval.

Also, the relaying station carries out the BIP calculation to the received transmission data to perform a parity check for every block. The BIP code obtained thus is arranged as the first quality monitor code in the first region of the overhead fields. Therefore, the detection of the transmission interval error can be made possible in each interval.

Further, the first quality monitor code and the second quality monitor code are distributed in the first half portion and the second half portion of a plurality of frames. Therefore, the data arrangement easy to find is realized.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims. Reference numerals appearing in the claims are illustrative only and the claims shall be interpreted as if they are not present.

The description of the invention with reference to the drawings is by way of example only.

The text of the abstract filed herewith is repeated here as part of the specification.

An optical signal transmission system includes a transmission station, at least one relaying unit connected to the transmission station via an optical path, and a reception station connected to the relaying unit via an optical path. The transmission station transmits a transmission signal to the reception station via the relaying unit, the transmission signal includes a first monitor code which is not subjected to a FEC (forward error correction) coding operation. The relaying unit detects a transmission error in the transmission signal without a FEC decoding operation based on the first monitor code.

## Claims

1. An optical signal transmission system comprising:
a transmission station (201);
at least one relaying unit (203) connected to said transmission station via an optical path (204); and
a reception station (202) connected to said relaying unit via an optical path,
wherein said transmission station transmits a transmission signal to said reception station via said relaying unit, said transmission signal includes a first monitor code which is not subjected to a FEC (forward error correction) coding operation, and
said relaying unit detects a transmission error in said transmission signal without a FEC decoding operation based on said first monitor code.

2. The optical signal transmission system according to claim 1, wherein said transmission signal comprises a plurality of frames,
each of said plurality of frames includes an overhead field, a data field and a FEC code field, and
said first monitor code is stored in ones of said overhead fields for said plurality of frames as a first field group.

3. The optical signal transmission system according to claim 1 or 2, wherein said transmission signal includes a second monitor code which is subjected to said FEC (forward error correction) coding operation in addition to said first monitor code, and
said reception station carries out said FEC decoding operation to said transmission signal and detects a transmission error in said transmission signal based on said second monitor code.

4. The optical signal transmission system according to claim 3, wherein said reception station detects a transmission error in said transmission signal between said relaying unit and said reception station based on said first monitor code.

5. The optical signal transmission system according to claim 3, wherein said transmission signal comprises a plurality of frames,
each of said plurality of frames includes an overhead field, a data field and a FEC code field, and
said first monitor code and said second monitor code are stored in first and second field groups of said overhead fields for said plurality of frames, respectively.

6. The optical signal transmission system according to claim 1, wherein said transmission signal comprises a plurality of frames,
each of said plurality of frames includes an overhead field, a data field and a FEC code field,
said first monitor code and said second monitor code are stored in first and second field groups of said overhead fields for said plurality of frames, respectively, and
said transmission station includes a transmission signal coding circuit which comprises:
a first BIP (Bit Interleaved Parity) calculating section (222) which carries out a first BIP calculation to a signal to be transmitted to store a result of said first BIP calculation as said second monitor code in said second field group;
a FEC coding section (225) which carries out a FEC coding operation to said first BIP calculation result and data of said signal after said first BIP calculation, to store an FEC code obtained as a result of said FEC coding operation in said FEC code field;
a second BIP calculating section (227) which carries out a second BIP calculation to said signal after said FEC coding operation to store a BIP code as said first monitor code in said first field group; and
a scrambling section (229) which scrambles said signal after said second BIP calculation based on a predetermined generation polynomial, an optical signal corresponding to said scrambled signal being transmitted to said reception station as said transmission signal.

7. The optical signal transmission system according to claim 1 or 6, wherein said transmission signal comprises a plurality of frames,
each of said plurality of frames includes an overhead field, a data field and a FEC code field,
said first monitor code and said second monitor code are stored in first and second field groups of said overhead fields for said plurality of frames, respectively, and
said relaying unit receives said transmission signal, and comprises:
a descrambling section (245) which descrambles said received signal based on a predetermined generation polynomial;
a first BIP check section (247) which carries out a third BIP calculation to said descrambled signal and compare a result of said third BIP calculation and said first monitor code stored in said first field group to determine whether said received signal has any transmission error;
a BIP calculating section (249) which carries out a fourth BIP calculation to said descrambled signal to store a result of said fourth BIP calculation as said first monitor code in said first field group; and
a scrambling section (251) which scrambles said received signal after said fourth BIP calculation, an optical signal corresponding to said received signal after said scrambling being transmitted to said reception station as said transmission signal.

8. The optical signal transmission system according to any of claims 1, 6 and 7, wherein said transmission signal comprises a plurality of frames,
each of said plurality of frames includes an overhead field, a data field and a FEC code field,
said first monitor code and said second monitor code are stored in first and second field groups of said overhead fields for said plurality of frames, respectively, and
said reception station receives said transmission signal, and comprises:
a descrambling section (277) which descrambles said received signal based on a predetermined generation polynomial;
an FEC decoding section (281) which carries out said FEC decoding operation and an error correction to said descrambled signal to produce an object signal; and
a BIP check section (283) which carries out a fifth BIP calculation to said object signal and compares a result of said fifth BIP calculation to said second monitor code stored in said second field group to detect any transmission error.

9. The optical signal transmission system according to claim 8, wherein said reception further comprises:
a second BIP check section (279) which carries out a sixth BIP calculation to said descrambled signal and compares a result of said sixth BIP calculation and said first monitor code stored in said first field group to detect any transmission error.

10. A method of monitoring a transmission quality in an optical signal transmission system including a transmission station, at least one relaying unit connected to said transmission station via an optical path, and a reception station connected to said relaying unit via an optical path, comprising:
transmitting a transmission signal from said transmission station to said reception station via said relaying unit, said transmission signal includes a first monitor code which is not subjected to a FEC (forward error correction) coding operation; and
detecting in said relaying unit, a transmission error in said transmission signal without a FEC decoding operation based on said first monitor code.

11. The method according to claim 10, wherein said transmission signal comprises a plurality of frames,
each of said plurality of frames includes an overhead field, a data field and a FEC code field, and
said first monitor code is stored in ones of said overhead fields for said plurality of frames as a first field group.

12. The method according to claim 10 or 11, wherein said transmission signal includes a second monitor code which is subjected to said FEC (forward error correction) coding operation in addition to said first monitor code, and
said method further comprises:
carrying out in said reception station, said FEC decoding operation to said transmission signal and detects a transmission error in said transmission signal based on said second monitor code.

13. The method according to claim 12, further comprising:
detecting in said reception station, a transmission error in said transmission signal between said relaying unit and said reception station based on said first monitor code.

14. The method according to claim 12, wherein said transmission signal comprises a plurality of frames,
each of said plurality of frames includes an overhead field, a data field and a FEC code field, and
said first monitor code and said second monitor code are stored in first and second field groups of said overhead fields for said plurality of frames, respectively.

15. The method according to claim 10, wherein said transmission signal comprises a plurality of frames,
each of said plurality of frames includes an overhead field, a data field and a FEC code field,
said first monitor code and said second monitor code are stored in first and second field groups of said overhead fields for said plurality of frames, respectively, and
said transmitting comprises:
carrying out a first BIP calculation to a signal to be transmitted to store a result of said first BIP calculation as said second monitor code in said second field group;
carrying out a FEC coding operation to said first BIP calculation result and data of said signal after said first BIP calculation, to store an FEC code obtained as a result of said FEC coding operation in said FEC code field;
carrying out a second BIP calculation to said signal after said FEC coding operation to store a BIP code as said first monitor code in said first field group; and
scrambling said signal after said second BIP calculation based on a predetermined generation polynomial, an optical signal corresponding to said scrambled signal being transmitted to said reception station as said transmission signal.

16. The method according to claim 10 or 15, wherein said transmission signal comprises a plurality of frames,
ach of said plurality of frames includes an overhead field, a data field and a FEC code field,
said first monitor code and said second monitor code are stored in first and second field groups of said overhead fields for said plurality of frames, respectively, and
said detecting in said relaying unit comprises:
receiving said transmission signal;
descrambling said received signal based on a predetermined generation polynomial;
carrying out a third BIP calculation to said descrambled signal and compare a result of said third BIP calculation and said first monitor code stored in said first field group to determine whether said received signal has any transmission error;
carrying out a fourth BIP calculation to said descrambled signal to store a result of said fourth BIP calculation as said first monitor code in said first field group; and
scrambling said received signal after said fourth BIP calculation, an optical signal corresponding to said received signal after said scrambling being transmitted to said reception station as said transmission signal.

17. The method according to any of claims 10, 15 and 16, wherein said transmission signal comprises a plurality of frames,
each of said plurality of frames includes an overhead field, a data field and a FEC code field,
said first monitor code and said second monitor code are stored in first and second field groups of said overhead fields for said plurality of frames, respectively, and
said method further comprises:
receiving said transmission signal by said reception station;
descrambling said received signal based on a predetermined generation polynomial;
carrying out said FEC decoding operation and an error correction to said descrambled signal to produce an object signal; and
carrying out a fifth BIP calculation to said object signal and compares a result of said fifth BIP calculation to said second monitor code stored in said second field group to detect any transmission error.

18. The method according to claim 17, further comprising:
carrying out a sixth BIP calculation to said descrambled signal and compares a result of said sixth BIP calculation and said first monitor code stored in said first field group to detect any transmission error.
